(19) Europäisches Patentamt

European Patent Office

Office européen des brevets

(11) **EP 4 742 193 A1**

(12) **EUROPEAN PATENT APPLICATION**

(43) Date of publication:
**13.05.2026 Bulletin 2026/20**

(21) Application number: **24211925.3**

(22) Date of filing: **08.11.2024**

(51) International Patent Classification (IPC):
**G06V 20/59** (2022.01)

(52) Cooperative Patent Classification (CPC):
**G06V 20/59; G06V 20/593; G06V 20/597**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(71) Applicant: **Aptiv Technologies AG
8200 Schaffhausen (CH)**

(72) Inventors:
• **KARAPETYAN, Ani
42327 Wuppertal (DE)**
• **KOCHHAR, Anirudh
42277 Wuppertal (DE)**
• **GEORGE, Amil
42117 Wuppertal (DE)**
• **REHFELD, Timo
51109 Köln (DE)**

(74) Representative: **Lewis Silkin LLP
Arbor
255 Blackfriars Road
London SE1 9AX (GB)**

(54) **SYSTEM AND METHOD FOR DETERMINATION OF 3D POSE IN A VEHICLE**

(57) System for estimating 3D pose of a vehicle occupant, comprises a camera with a field of view of a cabin interior. One or more processors detect and classify a relative pose of a vehicle occupant (11,12,13,14) from the captured image. An absolute depth/location of a joint, e.g. a hip joint (16,17), of the occupant is determined from at least one known vehicle interior dimension relative to the camera. A hip plane of the occupant is determined, e.g. relative to a seating plane of the seat. The collected data is fused to estimate the pose in three-dimensional space based on the relative pose and the absolute depth. A seat occupancy algorithm can detect occupancy of a seat and adjust the seating plane based on adjustments made to the seat and also presence or absence of a child seat.

Fig. 1.

EP 4 742 193 A1

## Description

## Field

The present disclosure relates to a system, method and associated software for determining/estimating a human pose, i.e. in three-dimensional space, in a vehicle. The invention is particularly relevant for implementing safety functions and related improvements in a vehicle.

## Background

Modern vehicles, e.g. fully or semi-autonomous driving cars and/or those with advanced driving assistance systems (ADAS), offer significant improvements in safety for occupants. Such vehicles are typically equipped with onboard cameras that are capable of capturing images of the vehicle's interior, e.g. as part of a driver monitoring system (DMS). These images can then be used, often in combination with other sensors, for different safety related tasks. Such tasks may involve not only detecting occupants in the vehicle, but also categorizing people and their positions.

Of course, a driver and passengers do not always sit still in a vehicle cabin and, instead, may adjust their pose or activity. Accordingly, tracking and determining occupant characteristics in three-dimensional space from a monocular camera image is challenging due to an inability to retrieve absolute depth information and, further, it is not possible for a human annotator to properly categorise and annotate 3D information on a 2D image for training models. Yet, absolute 3D pose estimation of an occupant is desirable and necessary for several downstream tasks like dynamic airbag deployment, seating pose classification, body size estimation, gesture recognition, etc.

## Summary

In view of the above considerations, there is a need for improving/enabling in-cabin 3D human pose estimation. At the least, the invention should provide an alternative to available pose estimation methods in the automotive field.

According to a first aspect, an in-cabin 3D pose estimation system is provided according to claim 1, e.g. including interpreting a 2D image, processed by a pose detection algorithm and based on a seating pose assumption.

In one form, the invention is embodied by fusing the outputs of a neural network, seat occupancy algorithm, prior information about the camera and cabin, and sensor signals in the vehicle. Such a fusion ultimately enables the system to estimate absolute 3d poses.

Broadly, the system and associated methodology is adapted to: capture/receive at least one image/-frame of a vehicle cabin interior, e.g. from a camera in the cabin with a field of view (FOV) that includes at least one occupant; detect, e.g. including per-joint root/person-relative depth values, and classify a relative pose of an occupant from the captured image/frame; compute an absolute depth/location of a single joint (e.g. known point) for each classified pose using at least one known vehicle interior dimension; estimate (e.g. in a fusion module) the pose in three dimensional space based on the relative pose and the absolute depth. The estimate may be output for the purpose of setting parameters for a safety function of the vehicle, e.g. disabling or modifying airbag deployment. In this way, 3D pose is estimated more accurately, resulting in reliable implementation of safety features.

In embodiments, computation of the absolute depth/location of the single joint comprises determination of a seating plane. The single joint may be a hip joint and a hip plane may be at or parallel to the seating plane. In this way, with a hip joint as a reference point for depth, determined relative to known dimensions in the vehicle within the FOV from the camera, accurate information about the 3D pose is estimated. In other words, the invention may utilize known, e.g. prior measured, information about the cabin, camera and vehicle seat sensors to determine a hip plane for each occupant.

In embodiments, the system comprises at least one sensor for detecting an occupant at a seating position.

In embodiments, an initialization process may be undertaken to identify known points in the cabin that will not be obscured by a vehicle occupant at the seating position. In this way, any adjustments in the seat height can be factored into 3D pose estimation. Initialisation may commence with a default seating plane that can be updated with the detected seating plane if the seat position is empty upon activation of the system. If the seat is occupied upon initialization, any seat adjustments may be detected (e.g. via sensors in the seat) for the purpose of updating the seating plane. Calibration parameters may be set based on the updated seating plane.

A child seat (empty or not) may be detected (e.g. by image recognition) from the captured image, causing a recalibration of the seating plane. In this way, the seating plane will be adjusted to above the default/initial seating plane if a child seat is present.

The system is embodied by a methodology according to claim 11. For example, where a first step requires a model to detect poses from a two-dimensional image, e.g. a software model trained to detect/track joint/-body markers of multiple occupants in a vehicle from the image or images; along with per-joint root/person-relative depth values, and output a pose classification. Such models can be built/refined by use of motion capture suits and/or manual modelling but the scale and absolute distance information is missing.

In a further step according to the disclosure, to map the relative poses to absolute poses, it suffices to compute an absolute depth/location of a single joint (known point) for each classified pose. For example, in the case of a sitting position/pose (hips on the seat) having been detected, the system can estimate the absolute hip joints depth/location in space using precomputed hip/seating plane(s). For non-seating poses, such as standing on a seat, one can refer to the output of another root-depth estimation network. For example, depending on the pose category, other joints such as knees/feet might be used (for kneeling/standing poses respectively) for finding the root-plane to anchor the relative pose in 3D space.

The present disclosure utilizes known, e.g. prior measured, information about the cabin, camera and vehicle seat sensors to determine, for example, a hip plane for each occupant, which is used for the absolute root-keypoint estimation. In a typical vehicle there will be a driver seating plane, co-driver seating plane and a rear seat plane determined for driver, co-driver (passenger) and rear seat occupants respectively. Extrinsic parameters of the camera are determined using prior information of known objects in the cabin (e.g. four known points on the roof/seats).

The seating plane may be initialized using known points on the seat. However, these points are often obscured by an occupant on the seat. Therefore, it is useful to perform an initialization step of the seating plane when the camera has full visibility to the known points, e.g. when the seat is empty.

Seat occupancy algorithms can be used to detect an empty seat and hence the right point in time to run the seating plane initialization algorithm. In cases where the seat position (height) is modified by the occupant on the seat, the system may adjust the seating plane using input signals from one or more vehicle seat sensors. The algorithm that is used to modify the seating plane is dependent on the type of vehicle seat movement sensor available in the vehicle.

Seat occupancy information may be used to adjust the hip plane offset with respect to the seating plane. For example, if there is a child-seat in place upon the seat, then the seating plane can be raised, based on a predefined offset specific for the child-seat.

Following determination of an absolute 3D pose, height estimation can be computed from the following physiological considerations. For example, torso based height, where an approximate height is calculated through a linear mapping between torso height and the height of the person. By experiment it was found that generally: height ≈ 3.5 x torso-length. Furthermore, the wingspan of an individual (i.e. the distance between tips of fingers of outstretched arms as per Da Vinci's "Vitruvian Man") is known to directly correspond to the height of that individual.

Since varying results are obtained based on position of the person, the invention overcomes this problem by weighting the different modes of height estimates based on the pose and position of the person.

## Brief Description of Drawings

Illustrative embodiments will now be described with reference to the accompanying drawings in which:

Figure 1 shows an example of predicted 2D human poses from a captured image;
Figure 2 shows a pictorial view of an empty cabin with seating regions;
Figure 3 shows a simplified schematic example of driver and passenger seat/hip planes and a camera image plane;
Figure 4 shows a block diagram where a seating plane is initialized and adjusted based on signals from a seat-occupancy algorithm and seat-height sensors;
Figure 5 shows an example of execution, particularly suited for the purposes of height estimation of a vehicle occupant;
Figure 6 shows an example of measuring a torso size from a seating pose in a captured image;
Figure 7 shows an example of measuring a wingspan from a seating pose in a captured image;
Figure 8 shows an example of an occupant turning to one side in a captured image;
Figure 9 shows an example of an occupant turning to the opposite direction of Figure 8;
Figure 10 shows an example of an occupant leaning forward in a captured image; and
Figure 11 shows an example of how to calculate a height estimation.

## Detailed Description

The following description presents exemplary embodiments and, together with the drawings, serves to explain principles of the invention. However, the scope of the invention is not intended to be limited to the precise details of the embodiments or exact adherence with all features and/or method steps, since variations will be apparent to a skilled person and are deemed also to be covered by the description. Terms for components used herein should be given a broad interpretation that also encompasses equivalent functions and features. In some cases, several alternative terms (synonyms) for features have been provided but such terms are not intended to be exhaustive. Descriptive terms should also be given the broadest possible interpretation; e.g. the term "comprising" as used in this specification means "consisting at least in part of" such that interpreting each statement in this specification that includes the term "comprising", features other than that or those prefaced by the term may also be present. Related terms such as "comprise" and "comprises" are to be interpreted in the same manner. Directional terms such as "vertical", "horizontal", "up", "down", "sideways", "upper" and "lower" are used for convenience of explanation usually with reference to the orientation shown in illustrations and are not intended to be ultimately limiting if an equivalent function can be achieved with an alternative dimension and/or direction.

The description herein refers to embodiments with particular combinations of steps or features, however, it may be envisaged that further combinations and cross-combinations of compatible steps or features between embodiments will be possible. Indeed, isolated features may function independently as an invention from other features and not necessarily require implementation as a complete combination.

In a particular implementation, the present disclosure describes a system that fuses the outputs of a neural network, seat occupancy algorithm output, prior information about the camera and cabin, and sensor signals in the car to estimate absolute 3d poses. This implementation is outlined below.

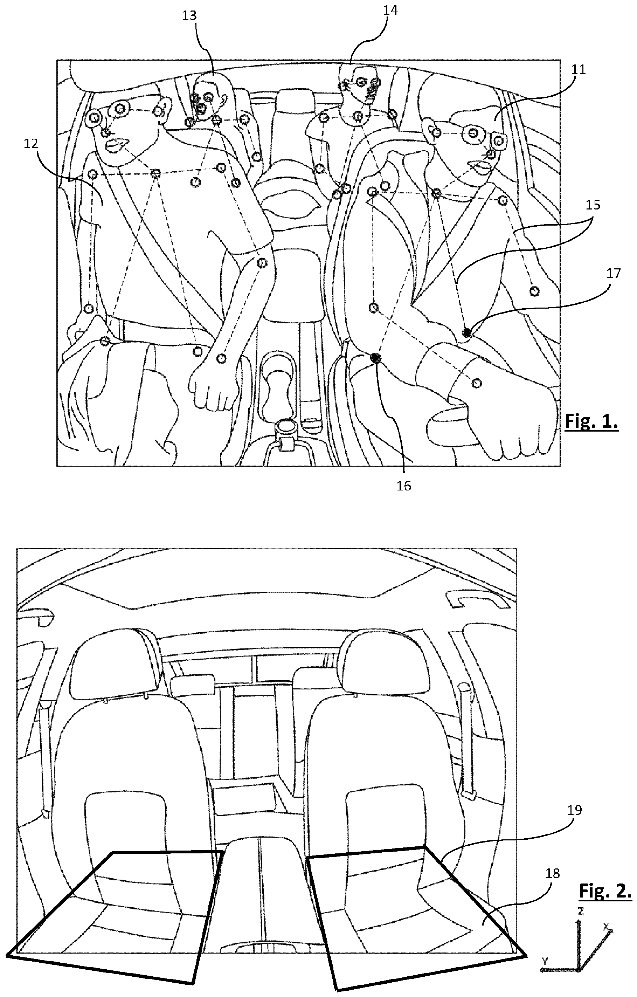

The system requires availability of a model detecting 2D-pose, as shown in Figure 1, which is configured to provide per-joint root/person-relative depth values and a pose classifier output. Examples of pose classification include a normal sitting position, leaning, kneeling, and standing on a seat. Figure 1 illustrates a driver 11 and three passengers, 12, 13 and 14. The co-pilot passenger 12 is located on a seat next to the driver, while passengers 13 and 14 sit on a bench seat at the rear of the cabin. Positions of the occupants are recognized and represented by a superimposed frame 15 comprising nodes at body joints/points, such as a right and left hip joint 16 and 17 respectively. Other visible joints may include shoulders, knees (e.g. visible when kneeling on seat) or ankles (e.g. if occupant is standing on a seat).

To map the relative poses of Figure 1 to absolute poses, for the purposes of the present implementation it suffices to compute the absolute depth/location of a single joint (e.g. known point) for each pose. For example, in the case of a normal sitting position (where hips are located at the back of the seat), it is possible to estimate the location of absolute hip joints 16, 17 by using precomputed hip/seating plane(s) .

Referring to Figure 2, for an occupant in the car, the root-keypoints that touch the seat 18 (e.g. hips/knees/feet) lie on a plane parallel to (e.g. base) seat-plane and are inside a region (i.e. the illustrated rectangle) 19 that spans the seat in XY-axes.

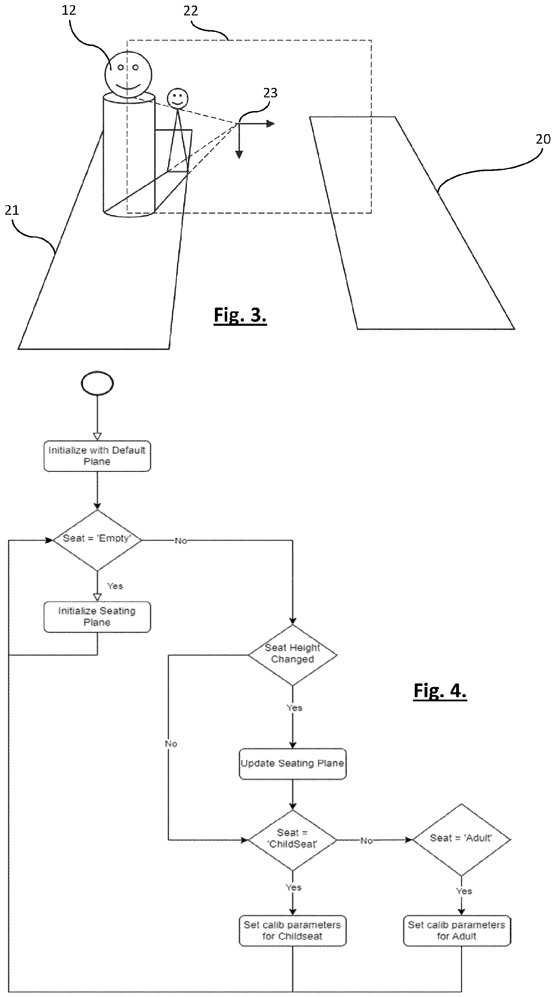

The implementation utilizes prior information about the cabin, camera and vehicle seat sensors to determine a seating plane and hip plane for each occupant, which is used for absolute root-keypoint estimation, as shown by Figure 3.

The seating plane and hip plane may be parallel, where the hip plane is slightly above the actual seating plane, i.e. where the seating plane is the surface of the seat. Although it is notable that in practice, the hips, by body weight, may sink into the seating plane.

Referring to Figure 3, in a typical vehicle there would be a driver hip plane 20, co-driver 12 hip plane 21 and a rear seat plane; i.e. determined for driver, co-driver and rear seat occupants respectively. The camera orientation/spatial location is determined using prior information of known objects in the cabin, e.g. four known points on the roof/seats. Examples of known/fixed points include A pillars, B pillars, sunroof, etc. The absolute distance of these objects from the camera location is known.

Figure 3 shows the driver and passenger hip planes (20 and 21), the camera image plane 22, and how the absolute 3D hip joints are found by tracing the rays passing through the camera origin 23 and the detected 2D hip points until they hit/intersect with the corresponding hip-plane 21.

The seating plane can be initialized using known points on the seat. However, these points are often occluded by an occupant in use. Therefore, it is useful to perform an initialization of the seating plane when the camera has visibility of the known points, for example when the seat is empty. An initialization process is outlined by Figure 4.

Seat occupancy algorithms can be used to detect an empty seat and hence the right point in time to run the seating plane initialization algorithm. For example, if the seat is occupied and seat position (e.g. height) is modified by an occupant on the seat, the seating plane can be adjusted using input signals from the vehicle seat sensors; e.g. raising the virtual seating plane by the same amount (mm) as the seat was physically raised.

The algorithm that is used to modify the seating plane is dependent on the type of vehicle seat movement sensor available in the vehicle. The seat occupancy information is used to adjust the hip plane parameters (e.g. offset or normal, coincident with seating plane) with respect to the seating plane defined by the position of the base of the seat. For example, as indicated in Figure 4, if there is a child-seat installed on the seat then the seating plane is raised based on a predefined parameters specific for the child-seat.

The seat occupancy algorithm of Figure 4 can comprise an initialization process beginning with a default seating plane and, when a seat is detected as empty, identifies known points in the cabin that will not be obscured by a vehicle occupant at the seating position to initialize the seating plane; or when a seat is detected as occupied, determines if seat adjustments have been made and, if so, updates the seating plane.

The seat occupancy algorithm may further determine the presence of a child seat but, if no child seat is determined, sets calibration parameters for an adult seating plane; or if a child seat is determined, sets calibration parameters for a child seat seating plane.

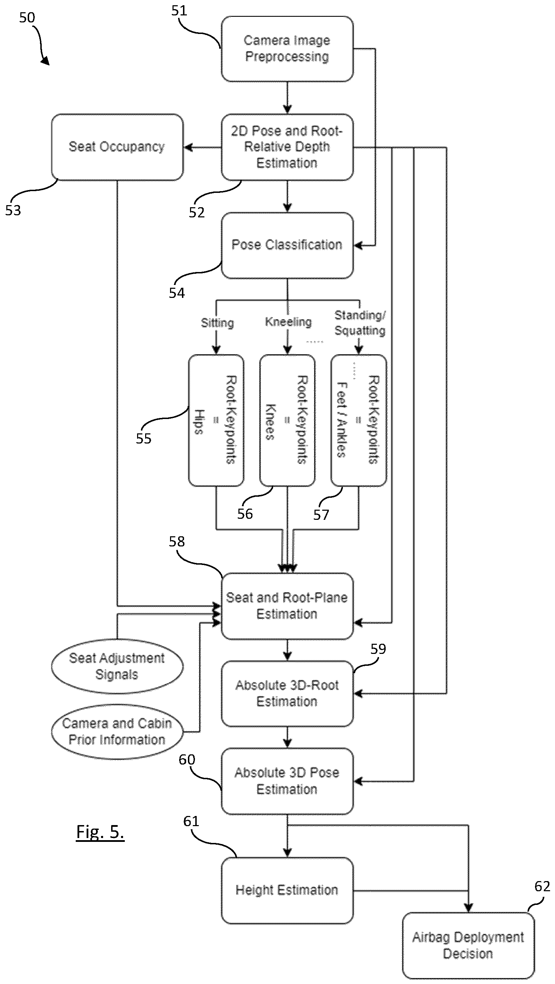

Figure 5 shows a general overview of a methodology 50 according to an example of the invention. A processor onboard the vehicle is configured to execute the outlined steps, e.g.:

Camera image preprocessor (block 51) : where a camera image is captured and preprocessed before feeding to image processing algorithms.

2D Pose and Root-relative depth estimation (block 52): where 2D pose in pixel space is detected (see Figure 1) by a neural network along with root-relative (e.g. hip) depth values, i.e. orthogonal distance per joint from the camera image plane.

Seat occupancy (block 53) : determines seat-assignment of each detected pose. Seat occupancy information is important as a means to determine the assignment of poses to seats and thus the corresponding seat-planes for each pose. Moreover, seat-occupancy is needed for determining the right time for seating plane recalibration (e.g. empty seat, seat-occupant change).

Pose classification (block 54): classifies the pose to different categories, e.g. sitting (hips) 55, kneeling (knees) 56, standing/squatting (feet/ankles) 57, etc.

Seat and root-plane estimation (block 58):

- based on the pose category the corresponding root-joint is selected (e.g. hip for sitting poses);
- for anchoring the pose at its 3D location which lies on the root-plane;
- root-plane is computed relative to seat-plane (for ex. shifting it by an offset depending on the seat-occupancy result);
- which in turn is computed by incorporating prior information about the camera and cabin as well as seat adjustment signals.

Absolute 3D root estimation (block 59) : 3D root location is found by intersecting camera ray, passing through camera origin and the 2D root-keypoint (in homogenous coordinate system), with the root-plane.

Absolute 3D pose estimation (block 60): first per-joint absolute depth values (relative to camera image plane) are computed by adding up the respective per-joint root-relative depth values (from block 52) to the absolute depth of the root-joint (from block 59). Then absolute 3D pose is constructed by lifting 2D points to 3D space given computed per-joint depth information.

Height estimation (block 61) and airbag deployment decision (block 62):

- height estimation can be performed from 3D pose, for example by approximating the full person height based on various limb lengths derived from 3D pose;
- height signal can then be accumulated/smoothed out over time to get a more robust estimate (which may be a function of passenger age), and can be used for a static airbag deployment/suppression decision;
- furthermore, 3D pose of an occupant can be directly employed in the dynamic airbag deployment decision 62, based on the position of the occupant (e.g. leaning towards the dashboard) relative to the cabin.

As exemplified, the processor generates an output 62, e.g. for configuring a safety device of the vehicle. Block 62 represents an airbag deployment device, such as where deployment of the airbag can be disabled if certain pose characteristics are determined. However, an output for other end-uses may be possible.

In summary, it will be understood that the above description generally outlines a methodology for estimating 3D pose of a vehicle occupant from a monocular image. In particular, from a known 2D pose analysis performed by a neural net model, an absolute depth is required to anchor the pose to. In the preferred solution, the location of occupant hips is used, which can be determined from known vehicle dimensions. The hips are a reliable feature point that can be determined within a vehicle cabin.

Broadly, the system and associated methodology for estimating 3D pose of a vehicle occupant described herein comprises a camera with a field of view of a cabin interior. One or more processors detect and classify a relative pose of a vehicle occupant from the captured image. An absolute depth/location of a joint, e.g. a hip joint, of the occupant is determined using at least one known vehicle interior dimension relative to the camera. A hip plane of the occupant is determined, e.g. relative to a seating plane of the seat. The collected data is fused to estimate the pose in three-dimensional space, based on the relative pose and the absolute depth. A seat occupancy algorithm can detect occupancy of a seat and adjust the seating plane based on adjustments made to the seat and also presence or absence of a child seat.

The invention can be implemented for height estimation of passengers in a cockpit which is valuable safety information, for instance for static airbag deployment where an airbag should not be deployed to a child seat - based on a determination that a child is shorter than an adult. The invention is also relevant for dynamic airbag deployment based on the position of the occupant (e.g. when leaning towards the dashboard) relative to the cabin. Deployment may be suppressed when it would cause injury to an occupant due to their temporary position in the cabin. A visual indicator, such as a red light, may be triggered if a safety feature is being disabled, such as suppression of airbag deployment; e.g. to warn an occupant that their safety is compromised.

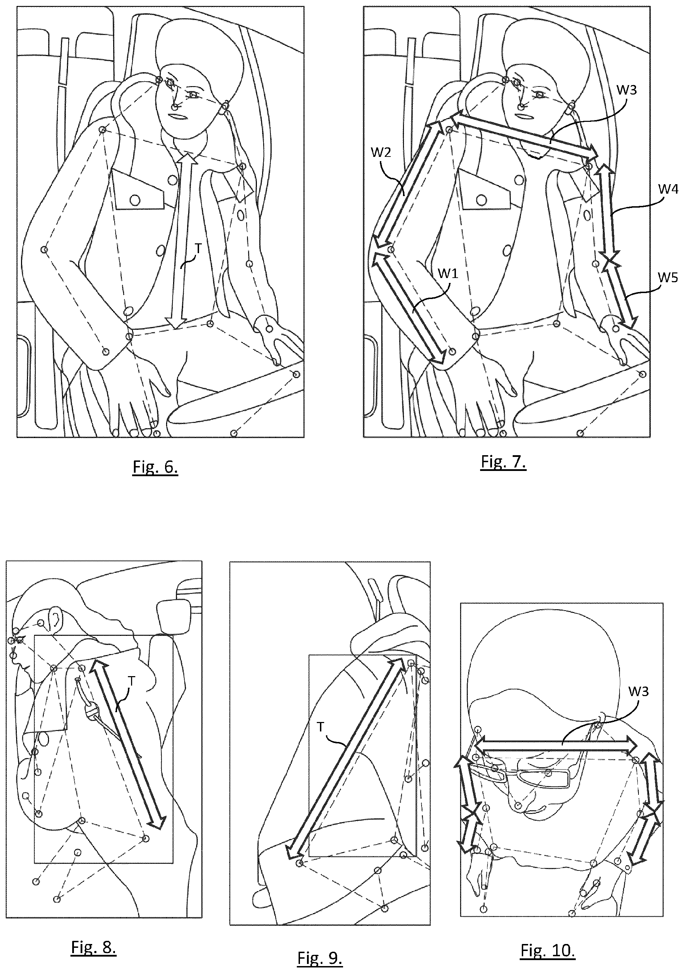

As noted herein, it is a challenging task to infer the height of a passenger from a monocular camera. Most of current research uses approximations from 2D joint detections but this has several disadvantages, e.g. faulty detections by human pose models, distortion in images leading to distorted estimates in turn, lack of accurate depth information leading to differing estimates for distinct positions (as addressed by present disclosure). Figure 6 outlines an implementation specific to height estimation.

Where the objective is to estimate height using a monocular camera image it is possible to rely on 2D and 3D human pose estimation as well as pose classification. The challenge to date is the lack of preciseness in height estimates based on 3D pose estimated from neural networks, which is often due to edge cases, occlusions, camera not able to capture the feet or knees of people, especially in cabin settings.

Hence, according to Figure 5, height of an occupant can be estimated through the steps outlined above. The method estimates the absolute depth of root joint (for each occupant) from a camera image according to the present disclosure, e.g. a novel method for absolute hip estimation based on information about the camera position and cabin dimensions. 2D to 3D Pose lifting is performed to construct absolute 3D pose by fusing previous results (i.e. projecting 2D points to 3D space given computed per-joint depth information).

Height Estimation at block 61 isimplemented to compute height from 3D pose. This can be achieved through a methodology which may be beyond the scope of the present invention. However, all stages up to block 61, and deployment decision 62 can be considered an example of the present invention.

Height Estimation may be determined according to the foregoing techniques. The following considerations are utilised for height estimation.

Torso based height: an approximate value can be calculated by a linear mapping between torso height and the height of the person, e.g. through experimentation it is found that generally: total height of an individual ≈ 3.5 x torso-height; where torso-height is the distance between the top of the seventh cervical vertebra (C7) and the top of the hip bones, or iliac crest.

Wingspan: where it is assumed that an individual's wingspan, i.e. the distance between fingertips, across the body, of outstretched arms (famously shown in Da Vinci's Vitruvian Man) is equal to the actual height of the individual.

However, varying results were noted based on a position of the person. For example, in the case of torso-based height one tends to underestimate the height of the top $5^{th}$ percentile. Further, torso size appears to vary noticeably based on whether a person is sitting or standing. Furthermore, linear mapping tends to vary based on the ethnicity, gender, age and body proportions of the person.

In the case of wingspan based height, this is highly dependent on accurate estimates of many keypoints. However, these estimates can show high variance based on the position of the person (e.g. angle of torso turn-around/recline).

To address these problems, the different modes of height estimate can be weighted based on the pose and position of the person.

To classify a pose one may:

- Create a list of poses, e.g. leaning, kneeling, standing on seat etc, that shows quite different height estimates for a given algorithm;
- Categorize images depicting these poses using manual annotations
- Train a pose classifier that uses 2D pose as input and classifies the pose into distinct categories.

The difference between height estimates and ground truth can be calculated for various positions and seating poses of people. The positions and poses are grouped based on standard deviation and mean of error. These positions and poses are defined as a single class for the pose classifier.

Taking a weighted average of different methods of height estimates adds robustness to the values. These weights can be defined as a function of torso angles with respect to the seating plane, and the pose of the person.

$$w_i = f_i(\alpha, \beta, \gamma, pose)$$

$$H = \frac{\sum_i w_i\, h_i}{\sum_i w_i}$$

Where $\alpha$ represents a recline angle (e.g. from vertical), $\beta$ represents a lean sideways (e.g. from vertical) and 7 represents a turn around/yaw angle. Pose refers to the pose classification through a pose classifier.

In a particular implementation, when an occupant whose height is to be estimated is in a normal-/vertical/forward facing seating position, both wingspan-based and torso-size based height estimates get high/-equal weighting in the determination.

In a body position identified with a high recline and/or lean angle, a higher weighting is given to the wingspan estimate; whereas for a body position identified with high turn around/yaw angles a higher weighting is given to the torso size estimate.

Generally, the more different the predicted pose is from a "normal" sitting pose, and the further different the two height estimates are for the same pose, the higher the output of height estimate is for a current time step. It will be apparent that estimates can be updated over time to converge on a determination of actual height of the subject occupant.

For example, a height histogram is constructed over time based on accumulation of normal distributions ($\mu$, $\sigma$) from each time step (e.g. through Kalman filtering).

Height can be used to infer whether it is a child or adult (e.g. categorized as small adult, medium adult, large adult according to NCAP requirements) occupant in a particular seating position. Comfort features such as automatic seat height/track adjustment, or safety features such as air bag deployment or disablement can be activated.

In general, the present methodology enables one to take the input of an RGB-IR 2D image, determine sparse 3D body keypoints and infer a height estimation therefrom. It was necessary to overcome the challenges of the deformable nature of a human body (e.g. a leaning forward person has a curved spine that is not well reflected in sparse keypoints), occlusions of keypoints, partial visibility of keypoints in cabin environment (e.g. the camera not being able to capture the entire body of the person especially legs).

A particular implementation is described herein with reference to Figures 6 to 11.

Figure 6 illustrates deriving a torso height estimate from an image of a person in a relatively front-facing sitting position. A torso height T is measured from lines respectively projected between the shoulder and hip joints.

Figure 7 illustrates deriving a wingspan estimate from an image of a person in a relatively front-facing sitting position. A wingspan is determined from a sum of measurements W1 to W5, i.e. lines respectively projected between a wrist and elbow, elbow and shoulder, shoulder to shoulder. Notably, an estimate of hand size (e.g. based on other limb sizes) on each side can be added to estimate complete wingspan.

Figures 8 and 9 illustrate an occupant turning to one side or the other (i.e. a yaw/twist movement) where the torso size T measurement is a more reliable estimate of overall height. Where such a position is identified, a greater weighting is given to the T measurement as an estimate of overall height.

Figure 10 illustrates an occupant leaning forward, and where the wingspan measurement (W1+W2+W3+W4+W5) is a more reliable representation of correct overall height. Where such a position is identified, a greater weighting is given to the wingspan measurement as an estimate of overall height.

Over time a collection of height estimates can be collected, converging upon what is likely to be an accurate representation of the true height of the occupant.

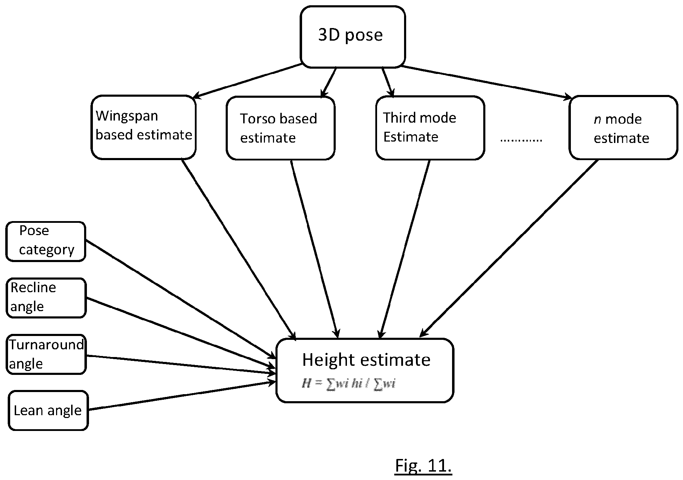

Referring to Figure 11, a general approach for height estimation is outlined according to the foregoing disclosure, i.e. seating pose information is used as input to a fusion module to determine fusion weights and ultimately output a height estimate for an occupant at a particular position in a vehicle.

The disclosure can be summarised as a system and method for estimating the height of a vehicle occupant, where a 2D image of an interior cabin is captured and a model is used to detect relative poses of the occupant. Height of the occupant is determined by weighting the results of at least two height estimation modes, e.g. wingspan and a multiplier of torso size, based on a pose detected by the model. The output height estimates may be accumulated into a distribution that, over time, indicates an improved height estimate of the occupant at its peak.

For completeness, statements of aspects relevant to the present disclosure are outlined as follows:

A computer implemented method for estimating the height of a vehicle occupant, comprising the steps of:

capturing an image of an interior cabin of a vehicle by a camera, including at least part of at least one occupant within the camera's field of view;
utilizing a model to detect relative poses of the at least one occupant from the captured two-dimensional image, and outputting a pose classification;
calculating a first height estimate by a first mode of height estimation from body part dimension estimates between joints derived by the model;
calculating a second height estimate by a second mode of height estimation from body part dimension estimates between joints derived by the model;
weighting the first and second height estimates based on the classified pose and according to which of the first and second mode is more accurate for that classified pose;
determining an output height estimate based on the weighted modes.

The method may further include accumulating a plurality of output height estimates, updating a distribution and selecting a peak of the distribution to improve accuracy of the height estimate. The output height estimate may be used for modifying a parameter of a vehicle device. The vehicle device may be an airbag deployment device and/or a seating adjustment.

The first mode may be an estimate of human body height based on wingspan. The weighting on the first mode is greater than the second mode when the pose is classified as a leaning or reclining pose. The second mode may be an estimate of human body height based on a multiplier of torso height. The weighting on the second mode is greater than the first mode when the pose is classified as a turnaround or twisting pose. In some forms, the method includes calculating a third or further height estimate based on a third or further mode of height estimate.

The step of utilizing a model to detect relative poses from the captured image may comprise: determining per-joint root/person-relative depth values; mapping the relative poses to absolute poses, by computing an absolute depth/location of a body joint of the occupant for each classified pose, based on a known dimension in the cabin relative to the camera. Computation of the absolute depth/location of the single joint may comprise determination of a seating plane. The joint may be a hip joint and a hip plane is determined relative to the seating plane.

A vehicle system may be provided, comprising: at least one processor configured to execute steps of the method according to any preceding claim; an image sensor configured to capture at least one image of a vehicle cabin interior with a field of view that includes the at least one occupant. The processor may comprise a fusion module for fusing the outputs of a neural network that performs the detection and classification of relative pose, and prior measured information of the at least one known vehicle interior dimension. The at least one processor may be further configured to execute a seat occupancy algorithm for determining the presence or absence of an occupant in a seating position and/or whether the seating position has been adjusted, in which case the seating plane is updated.

## Claims

1. A system for estimating 3D pose of a vehicle occupant, comprising:

   an image sensor configured to capture at least one image of a vehicle cabin interior with a field of view that includes at least one occupant;
   at least one processor configured to:

   detect and classify a relative pose of an occupant from the captured two-dimensional image;
   compute an absolute depth/location of a joint of the occupant using at least one known vehicle interior dimension;
   estimate the classified pose in three-dimensional space based on the relative pose and the absolute depth.

2. The system according to claim 1, wherein the processor generates an output based on the 3D pose for use by a vehicle safety device.

3. The system according to claim 2, comprising an airbag deployment device, wherein the output configures parameters of the airbag deployment device.

4. The system according to any preceding claim, wherein the processor comprises a fusion module for fusing the outputs of a neural network that performs the detection and classification of relative pose, and prior measured information of the at least one known vehicle interior dimension.

5. The system according to any preceding claim, wherein computation of the absolute depth/location of the single joint comprises determination of a seating plane.

6. The system according to claim 5, wherein the joint is a hip joint and a hip plane is determined relative to the seating plane.

7. The system according to claim 5 or 6, wherein the at least one processor is further configured to execute a seat occupancy algorithm for determining the presence or absence of an occupant in a seating position and/or whether the seating position has been adjusted, in which case the seating plane is updated.

8. The system according to claim 7, wherein the seat occupancy algorithm comprises an initialization process beginning with a default seating plane and:

   when a seat is detected as empty, identifies known points in the cabin that will not be obscured by a vehicle occupant at the seating position to initialize the seating plane; or
   when a seat is detected as occupied, determines if seat adjustments have been made and, if so, updates the seating plane.

9. The system according to claim 7 or 8, wherein the seat occupancy algorithm is configured to determine the presence of a child seat and:

   if no child seat is determined, sets calibration parameters for an adult seating plane; or
   if a child seat is determined, sets calibration parameters for a child seat seating plane.

10. The system according to any preceding claim, further comprising a sensor for detecting an occupant in a seat and/or at least one seat adjustment device, wherein the processor is configured to log an adjustment by the seat adjustment device for assisting computation of the absolute depth/location of the joint of the occupant.

11. A computer implemented method for estimating 3D pose of a vehicle occupant, comprising the steps of:

   capturing an image of an interior cabin of a vehicle, by a camera;
   utilizing a model to detect relative poses from the captured image, along with per-joint root/person-relative depth values, and output a pose classification;
   map the relative poses to absolute poses, by computing an absolute depth/location of a body joint of the occupant for each classified pose, based on a known dimension in the cabin relative to the camera.

12. The computer implemented method of claim 11, wherein for a seating pose the body joint is a hip joint.

13. The computer implemented method of claim 11, wherein for a non-seating pose, a root-depth estimation network is used.

14. A non-transient computer readable medium comprising instructions which, when executed by a processor, implement the method of claims 11 to 13.

15. A vehicle comprising the system of any of claims 1 to 10.

**Fig. 1.**

**Fig. 2.**

**Fig. 3.**

**Fig. 4.**

Fig. 5.

Fig. 6.

Fig. 7.

Fig. 8.

Fig. 9.

Fig. 10.

3D pose

Wingspan based estimate

Torso based estimate

Third mode Estimate

..........

$n$ mode estimate

Pose category

Recline angle

Turnaround angle

Lean angle

Height estimate

$$H = \sum wi\, hi\, /\, \sum wi$$

Fig. 11.

Europäisches
Patentamt

European
Patent Office

Office européen
des brevets

# EUROPEAN SEARCH REPORT

**Application Number**

**EP 24 21 1925**

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2022/292705 A1 (FRIEDMAN YANIV [IL] ET AL) 15 September 2022 (2022-09-15) | 1-4,11, 14,15 | INV. G06V20/59 |
| A | * abstract *<br>* paragraphs: [0190]-[0191], [0194], [0200], [0202], [0204], [0210] *<br>* figures 1A, 8 * | 5-10,12, 13 | |

-----

**TECHNICAL FIELDS SEARCHED (IPC)**

G06V

The present search report has been drawn up for all claims

| Place of search | Date of completion of the search | Examiner |
|---|---|---|
| The Hague | 6 March 2025 | Sagrebin-Mitzel, M |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**EP 4 742 193 A1**

## ANNEX TO THE EUROPEAN SEARCH REPORT
## ON EUROPEAN PATENT APPLICATION NO.

EP 24 21 1925

06-03-2025

| Patent document cited in search report | Publication date | Patent family member(s) | Publication date |
|---|---|---|---|
| US 2022292705 A1 | 15-09-2022 | CN 114144814 A | 04-03-2022 |
| | | EP 3966740 A1 | 16-03-2022 |
| | | US 2022292705 A1 | 15-09-2022 |
| | | US 2024087165 A1 | 14-03-2024 |
| | | WO 2021005603 A1 | 14-01-2021 |

For more details about this annex : see Official Journal of the European Patent Office, No. 12/82